# EUROPÄISCHE PATENTSCHRIFT

(11) **EP 1 215 031 B1**
(45) Veröffentlichungstag und Bekanntmachung des Hinweises auf die Patenterteilung: **01.02.2006**
(21) Anmeldenummer: 02004846.8
(22) Anmeldetag: 22.10.1999
(51) Int. Cl.: B29C 45/72, B29C 35/16, B29B 11/08

(54) **Verfahren sowie Vorrichtung zur chargenweisen Nachkühlung von hülsenförmigen Spritzgiessteilen**
Method and apparatus for batchwise cooling of injection-molded sleeve-shaped parts
Dispositif et procédé de refroidissement par lots de pièces en forme d'enveloppes moulées par injection

(30) Priorität: 22.10.1998 DE 19848837; 09.09.1999 CH 165499
(43) Veröffentlichungstag der Anmeldung: 19.06.2002
(62) Teilanmeldung aus: 99948638.4
(73) Patentinhaber: Netstal-Maschinen AG, 8752 Näfels (CH)
(72) Erfinder: Weinmann, Robert, 8872 Weesen (CH); Egger, Caspar, 8750 Glarus (CH); Viron, Alan, Desmonts, 45390 Puiseaux (FR); Meier, Ernst, 8868 Oberurnen (CH)
(74) Vertreter: Ackermann, Ernst

(56) Entgegenhaltungen:
- EP-A- 0 372 671
- EP-A- 0 633 119
- EP-A- 0 718 084
- EP-A- 0 813 949
- EP-A- 0 947 304
- US-A- 5 114 327

## Beschreibung

### Technisches Gebiet

Die Erfindung betrifft ein Verfahren für das chargenweise Nachkühlen einer grösseren Zahl von einseitig mit einem Boden verschlossenen, hülsenförmigen Spritzgiessteilen, welche nach dem Spritzvorgang den Giessformen entnommen und nachgekühlt werden und dabei in Wasserkühlrohre eines Nachkühlers eingeschoben und wieder ausgestossen und von einem halbstarren Zustand beim Öffnen der Giessformhälften in einen formstabilen Lagerzustand gebracht und einem Weitertransport übergeben werden, wobei die Wasserkühlrohre des Nachkühlers in parallelen Reihen angeordnet sind, ferner eine Vorrichtung für das chargenweise Nachkühlen einer grösseren Zahl von einseitig mit einem Boden verschlossenen, hülsenförmigen Spritzgiessteilen, welche nach dem Spritzvorgang den Formen entnommen und nachgekühlt werden und dabei in Wasserkühlrohre eines Nachkühlers eingeschoben und wieder ausgestossen und von einem halbstarren Zustand beim Öffnen der Formhälften in einen formstabilen Lagerzustand gebracht und einem Weitertransport übergeben werden, wobei die Wasserkühlrohre des Nachkühles in parallelen Reihen angeordnet sind.

### Stand der Technik

Bei der Herstellung von den typisch dickwandigen Spritzgiessteilen der oben genannten Art ist für die erreichbare Zykluszeit die Kühlzeit, insbesondere die Nachkühlzeit, ein wichtiger und bestimmender Faktor. Die Hauptkühlleistung findet noch in den Giessformhälften statt. Beide Giessformhälften werden während dem Giessprozess intensiv wassergekühlt, so dass die Temperatur noch in der Form von etwa 280°, wenigstens in den Randschichten, bis etwa 70° bis 80° C gesenkt werden kann. 2/3 der Kühlleistung erfolgt dabei über den Kern, 1/3 über die Aussenkühlung der entsprechenden Spritzgiessformen. Es wird in den äusseren Schichten sehr rasch die sogenannte Glastemperatur von etwa 140° C durchfahren. Der eigentliche Giessvorgang bis zur Entnahme der Spritzgiessteile konnte auf etwa 13 bis 15 Sekunden gesenkt werden, mit optimalen Qualitäten in Bezug auf die noch halbstarren Spritzgiessteile. Die Spritzgiessteile müssen so stark verfestigt werden, dass diese mit relativ grossen Kräften der Auswurfhilfen angefasst und ohne Deformation bzw. Schäden einer Entnahmevorrichtung übergeben werden können. Die Entnahmevorrichtung weist eine den Spritzggiessteilen angepasste Form auf, damit während der nachfolgenden Behandlung die Form der Spritzgiessteile exakt erhalten bleibt. Die intensivere Wasserkühlung in den Giessformhälften erfolgt physikalisch bedingt und in Bezug auf die enorme Wandstärke stark zeitverzögert, von aussen nach innen. Dies bedeutet, dass die 70° bis 80° C nicht einheitlich im ganzen Querschnitt erreicht werden. Die Folge ist, dass eine rasche Rückerwärmung, im Materialquerschnitt gesehen, von innen nach aussen erfolgt, sobald die intensive Kühlwirkung unterbrochen wird. Der sogenannten Nachkühlung kommt aus zwei Gründen grösste Bedeutung zu: Erstens sollen jegliche Formänderungen bis zum formstabilen Lagerzustand, aber auch Oberflächenschäden, etwa Druckstellen, usw. vermieden werden. Es muss zweitens verhindert werden, dass die Abkühlung im höheren Temperaturbereich zu langsam erfolgt und sich z.B. durch Rückerwärmungen örtlich schädliche Kristallbildungen einstellen. DasZiel ist ein gleichmässig amorpher Zustand im Material der vergossenen Form. Die Oberfläche der Spritzgiessteile darf nicht mehr klebrig sein, weil sonst in den relativ grossen Kisten bzw. Abpack-gebinden mit Tausenden von lose eingeschütteten Teilen an den Berührungspunkten Haftschäden entstehen können. Die Spritzgiessteile dürfen auch bei leichter Rückerwärmung eine Oberflächentemperatur von 40°C nicht überschreiten.

Die Praxis zeigt, dass die Nachkühlung nach der Entnahme der Giessteile aus der Spritzgiessform genau so wichtig wie ist, die Hauptkühlung in den Giessformen. Der Giessfachmann weiss, dass selbst kleine Fehler grosse Auswirkungen haben können. Beim Testen neuer Materialien, besonders aber bei Produktionsunterbrüchen durch Prozessfehler, kann es vorkommen, dass die heissen Spritzgiessteile etwas zu lange auf den dornartigen Positivformen verbleiben. Die Folge kann sein, dass durch den weitergehenden Schrumpfvorgang in den Spritzgiessteilen, bedingt durch die Abkühlung, diese mit den normalen Ausstosskräften der Maschine nicht mehr abgestossen und nur noch mit speziellen Hilfseinrichtungen von den Formen gelöst werden können.

Gemäss einer ersten Technik des Standes der Technik (EP-A-0 266 804) wird auch Wasser als Kühlmittel für die Nachkühlung eingesetzt. Das im halberstarrten Zustand aus der Spritzgiessform entnommene Spritzgiessteil wird in wassergekühlten Transport- und Nachkühleinrichtungen soweit abgekühlt, bis ein formstabiler Endzustand erreicht ist. Die noch halbstarren Spritzgiessteile werden unmittelbar nach der Entnahme aus den Formhälften in von Kühlwasser umströmte Kühlkonen eingeschoben. In der letzten Phase des Einschubvorganges wird das Spritzgiessteil mit Hilfe von Unterdruck noch ganz in die Kühlkonen eingezogen und von aussen gekühlt. Die Unterdruckbeaufschlagung erfolgt über einen Luftraum bzw. Druckraum, mit dem der Innenraum des beidseits offenen Wasserkühlrohrs direkt verbunden ist. Die Innenkontur der Kühlrohre ist in gleicher Weise wie die Aussenkontur des hülsenförmigen Spritzgiessteils relativ stark konisch geformt. Dadurch wird das Spritzgiessteil während der Abkühlphase und dem damit einhergehenden Schwund durch die Unterdruckbeaufschlagung, zumindest theoretisch, stets nachgezogen. Auf diese Weise wird versucht sicherzustellen, dass das Spritzgiessteil optimal im Kühlkontakt mit der konischen Innenwandung der Kühlkonen bleibt. In der Praxis ist der dargestellte ideale Kühlkontakt nicht immer erreichbar. Bei einer bekannten Lösung werden die Spritzgiessteile liegend nachgekühlt. Dabei verhindern kleinste Haftstellen das gedachte, ständige Nachziehen. Nach Beendigung der betreffenden Kühlphase bzw. nach Erreichen eines formstabilen Zustandes des hülsenförmigen Spritzgiessteils wird im genannten Luftraum der Unterdruck abgeschaltet und Überdruck erzeugt. Alle Spritzgiessteile werden danach durch Umschalten auf Luftüberdruck kolbenartig aus den konischen Wasserkühlrohren ausgestossen.

Eine zweite Technik, die sogenannte Luftkühlung, ist in der US-A-4 592 719 beschrieben. Dabei wird vorgeschlagen, die Produktionsrate der Preformen dadurch zu erhöhen, dass anstelle von einer getrennten Nachkühlungsstation atmosphärische Luft zur Kühlung verwendet wird. Die Luft wird als Kühlluft während dem Transport bzw. "Handling" durch gezielte Strömungsführung, sowohl innen wie aussen, an den Preformen mit maximaler Kühlwirkung eingesetzt. Eine Entnahmevorrichtung, welche so viele Saugrohre aufweist, wie in einem Spritzzyklus Teile hergestellt werden, fährt zwischen den beiden offenen Formhälften ein. Die Saugrohre werden sodann über die Preformen geschoben. Gleichzeitig beginnt über eine Saugleitung, Luft im Bereich der ganzen von den Saugrohren umfassten Umfangsfläche der Spritzgiessteile zu strömen, so dass diese vom Moment der Übernahme in die Saughülse mit der Luft von aussen gekühlt werden. Die Entnahmevorrichtung fährt nach vollständiger Übernahme aller Spritzgiessteile eines Giesszyklusses aus dem Bewegungsraum der Formhälften heraus. Die Formhälften sind sofort wieder frei für den nachfolgenden Giesszyklus. Die Entnahmevorrichtung verschwenkt die Preformen nach der Ausfahrbewegung von einer horizontalen in eine aufrechte Lage. Gleichzeitig fährt eine Transfervorrichtung exakt in eine Übergabeposition über der Entnahmevorrichtung. Die Transfervorrichtung weist eine gleiche Zahl Innengreifer auf wie die Entnahmevorrichtung Saugrohre hat. Rechtzeitig nach der Übergabe aller Spritzgiessteile und vor dem erneuten Öffnen der Formhälften wird die Entnahmevorrichtung zurück in die Einfahrposition geschwenkt, so dass die nächste Charge Spritzgiessteile den Formen entnommen werden kann. Die Transfervorrichtung übergibt in der Zwischenzeit die neuen, formstabilen Spritzgiessteile einem Transporteur und fährt ohne die Preformen auch wieder zurück in die Übernahmeposition für die nächste Charge.
Der Hauptnachteil der Lösung gemäss US-A 4 592 719 liegt darin, dass die Nachkühlzeit sozusagen unveränderbar gleich der Giesszykluszeit ist. Auch wenn durch geeignete Luftführungen allenfalls kleinere Steigerungen der örtlichen Luftgeschwindigkeiten und damit eine gewisse Verkürzung erreichbar ist, so ist doch die unabänderliche Physik des Luftkühlvorganges absolut bestimmend für die Produktionsrate. Eine Steigerung wäre nur möglich durch eine Vergrösserung der pro Giesszyklus in einer Mehrfachgiessform hergestellten Spritzgiessteile. Diese Stückzahl ist aber in aller Regel durch den maximalen Pressendruck der Spritzgiessmaschine beschränkt. Die vorgeschlagene technische Lehre, die Preformen sowohl innen wie aussen während der Entnahme und dem Transport mit Luft zu kühlen, ergibt systembedingt eine Beschränkung der maximal möglichen Produktionsmenge. Die Nachkühlzeit beschränkt hier die Leistungsfähigkeit der Anlage.

Ein Verfahren und eine Vorrichtung gemäss den Oberbegriffen der Ansprüche 1 und 7 ist bekannt aus EP-A-0 718 084. Die EP-A-0 718 084 weist drei unterschiedliche Vorrichtungen auf: eine Entnahmevorrichtung und eine Transfervorrichtung sowie eine Nachkühleinrichtung. Der Transfergreifer hat eine Doppelfunktion, da die Petformen sowohl in die Nachkühleinrichtung gebracht, wie daraus wieder entnommen werden. Dabei wird vorgeschlagen, auf eine Kühlung in der Transfervorrichtung zu verzichten, um durch entsprechende Gewichtsersparnis raschere Bewegungen durchführen zu können.

Die nachveröffentlichte EP-A-0 947 304 schlägt eine zentrale Kühlung eine Innenkühlung mit Luft durch eine kombinierte Vorrichtung vor. Die Kombination in einer Vorrichtung umfasst die Funktion einer Transfervorrichtung sowie einer eigentlichen Nachkühlung von innen, bis eine Kristallisation im Inneren vollständig verhindert wird. Die eingangs erwähnte Wasserkühlmethode unterliegt zwar auch gewissen Beschränkungen. Die Praxis zeigt jedoch, dass mit der Wasserkühlung bei gleicher Kavitätenzahl durch Senken der Zykluszeit eine viel grössere Stückzahl an Spritzgiessteilen produzierbar ist, vorausgesetzt, dass ideale Bedingungen eingehalten werden können. Die Kavitäten der Spritzgiessform können Unregelmässigkeiten haben, was zu Differenzen in der Aussenkontur der hülsenförmigen Spritzgiessteile führt. In gleicher Weise sind nicht alle Innenkonturen der Wasserkühlrohre exakt gleich. Dies führt dazu, dass manche der hülsenförmigen Spritzgiessteile nach Beendigung der Kühlphase bereits durch das Eigengewicht aus dem Wasserkühlrohr gleiten und andere hülsenförmige Spritzgiessteile noch in den Kühlrohren haften bleiben oder sogar darin klemmen. In einer derartigen Situation sinkt der Abblasdruck im Druckraum durch die vorab entleerten Kühlrohre auf Umgebungsdruckniveau ab und reicht nicht mehr aus, um die noch in einigen Kühlrohren verbliebenen und zum Teil noch leicht klemmenden hülsenförmigen Spritzgiessteile auszustossen. Dies führt zu einer Unterbrechung bis zum nachfolgenden Produktionszyklus. Weil die in einigen Kühlrohren verbliebenen hülsenförmigen Spritzgiessteile die Aufnahme neuer Spritzgiessteile versperren, müssen diese von Hand entnommen werden.
Die EPA-0 813 949 zeigt eine Lösung bei der die Nachkühlung der Preformen in einer Vielzahl von Tragplatten erfolgt. Für die Nachkühlung wird Kühlluft verwendet, welche bedeutend weniger effizient ist, als eine Wasserkühlung. Die Nachkühlung erfordert bei der Luftkühlung eine sehr lange Zeit und einen entsprechend grossen apparativen Aufwand.

### Darstellung der Erfindung

Der Erfindung wurde nun die Aufgabe zugrunde gelegt, eine Spritzgiessmaschine bzw. das entsprechende Verfahren zur Herstellung von hülsenförmigen Spritzgiessteilen so zu verbessern, dass bei Gewährleistung einer optimalen Kühlwirkung die Produktivität gesteigert und die Nachkühlzeit von dem eigentlichen Giesszyklus soweit erforderlich unabhängig gemacht werden kann, so dass die Nachkühlzeit kein bestimmter Faktor ist im Hinblick auf die erreichbare Spritzgiesszykluszeit.

Diese Aufgabe wird gelöst durch das Verfahren und die Vorrichtung gemäss den Ansprüchen 1 und 7. Das Verfahren gemäss dem Anspruch 1 ist dadurch gekennzeichnet, dass die Wasserkühlrohre des Nachkühlers in versetzten Reihen angeordnet sind, wobei durch entsprechendes Querschieben und Längsschieben der Nachkühler zwei oder mehrere Chargen von Spritzgiessteilen von je einem Spritzgiesszyklus aufnehmen kann, und die Füllung und Kühlung einzelner Chargen je eines Giesszyklusses in ersten, zweiten, usw. Reihen zyklisch erfolgt.

Die Vorrichtung gemäss Anspruch 7 ist dadurch gekennzeichnet, dass die Wasserkühlrohre in versetzten Reihen in dem Nachkühler angeordnet sind, und die Füllung und Kühlung einzelner Chargen durch eine entsprechende Quer- und Längsverschiebung des Nachkühlers für je einen Spritzgiesszyklus in ersten, zweiten, usw. Reihen durchführbar ist.
Ein anderer Problemkreis wurde in der Problematik der Dickwandigkeit erkannt, vor allem jedoch in dem Bereich des Bodens der Spritzgiesshülsen. Bei den Lösungen des Standes der Technik mit Wasserkühlung wird diese Zone wesentlich schlechter erreicht. Hier wurden Mittel und Wege gesucht, um diesen besonders kritischen Punkt zu verbessern. Im Hinblick auf die Aufgabenstellung, nämlich eine Produktivitätssteigerung bei maximal möglicher Produktqualität, wurde gleichsam nach einer Entkoppelung der bisherigen strengen Bindung von Giesszyklus und Nachkühlung gesucht. Die neue Erfindung erlaubt nun eine ganze Anzahl besonders vorteilhafter Ausgestaltungen im Hinblick auf die gestellte Aufgabe bzw. die aufgezeigten Probleme.

Für die besonders vorteilhaften Ausgestaltungen wird auf die Ansprüche 2 bis 6 sowie 8 bis 12 Bezug genommen.

Dem Einschiebeende der Wasserkühlrohre gegenüberliegend wird, wie im Stand der Technik, ein kontrollierbarer Druck- bzw. Unterdruckraum vorgesehen. Gemäss der neuen Lösung wird jedoch der Druckraum gegenüber dem Innenraum der Kühlrohre verschliessbar und mit verschiebbaren Elementen, z.B. als Ventilelemente oder Kolbenelemente, ausgebildet. Durch die Ventilwirkung werden die Spritzgiessteile bei Unterdruck angesaugt und sicher gehalten. Bei Überdruck in den Druckraum wird das Ausstossen der Spritzgiessteile unterstützt. Der ganze Bereich der Nachkühlung wird vorteilhafterweise dreistufig ausgebildet und weist eine Entnahmevorrichtung, einen Transfergreifer sowie eine Nachkühleinrichtung auf. Die Luftdüsen sind bevorzugt Teil des Transfergreifers und übergeben als Zentrierdorne ausgebildet die Spritzgiessteile von der Entnahmevorrichtung an die Nachkühleinrichtung. Eine übergeordnete Steuerung ist vorgesehen, welche taktmässig die Transportschritte und zyklisch die Kühlphasen koordiniert. Die Bewegungszyklen bzw. Verfahrenseingriffe der Entnahmevorrichtung, des Transfergreifers sowie der Nachkühleinrichtung können dabei für eine Prozessoptimierung oder für die Herstellung eines neuen Produktes bzw. einer neuen Produktqualität unabhängig eingestellt werden. Die Transfereinheit übernimmt mittels der Luftdüsen bzw. Zentrierdorne die Spritzgiessteile von dem Entnahmegreifer in einer horizontalen Lage. Mit einer Verschwenkbewegung werden die Spritzgiessteile in eine aufrechte Lage gebracht und in die wassergekühlten Hülsen der Nachkühleinrichtung geschoben. Bei der Übergabe der Spritzgiessteile von dem Entnahmegreifer verharren die Luftdüsen in einer eingeschobenen Position, vorzugsweise während mehreren Sekunden. Dabei kommt eine Intensivblaskühlung, besonders des halbkugelförmigen Bodens, an der Innenseite der Spritzgiessteile zum Einsatz. In dieser Phase wird das Spritzgiessteil, vor allem auch an der meist kritischen Partie, von innen und von aussen, also doppelt gekühlt. Die Nachkühleinrichtung weist parallel angeordnet Zwei- oder Mehrfachreihen von gegebenenfalls versetzten Wasserkühlrohren auf. Durch entsprechendes Querverschieben und Längsverschieben kann die Nachkühleinrichtung zwei oder mehrere Chargen von Spritzgiessteilen je eines Spritzgiesszyklusses zur Reduktion der Giesszykluszeit und Erhöhung der Nachkühlzeit aufnehmen. Die neue Lösung erlaubt durch die aufgezeigten Massnahmen eine starke Effizienzsteigerung. Die Phase der Entnahme der Spritzgiessteile aus den Formhälften und der vollständigen Übergabe an die Nachkühleinrichtung entspricht angenähert der Zeitdauer eines auf ein Minimum verkürzten Giesszyklusses. Die totale Nachkühlzeit kann jedoch auf eine zwei- bis dreifachen Giesszykluszeit erhöht werden. Die neue Lösung gestattet dabei gezielt in bestimmten Phasen eine doppelte Kühlung von innen und aussen auf die Spritzgiessteile, dies während einem bedeutenden Anteil der Giesszykluszeit, unmittelbar nach der Entnahme der Spritzgiessteile aus den Formhälften.

### Kurze Beschreibung der Erfindung

Die Erfindung wird nachfolgend mit einigen Ausführungsbeispielen sowie schematischen Zeichnungen näher erläutert. Es zeigen:
- die Figur 1: schematisch eine ganze Spritzgiessmaschine mit Entnahme-, Transfer- und Nachkühleinrichtungen für die Spritzgiessteile,
- die Figuren 2a und 2b: zwei verschiedene Handlings- bzw. Übergabesituationen für die Preformen;
- die Figur 3: eine bekannte Lösung des Standes der Technik für die Wasserkühlung von Preformen;
- die Figur 4: ein Beispiel einer Lösung gemäss der neuen Erfindung;
- die Figuren 5a, 5b und 5c: eine besonders interessante Ausgestaltung der neuen Lösung in Bezug auf die Aussenkühlung und den Einzug bzw. das Ausstossen der Spritzgiessteile;
- die Figur 6: schematisch die verschiedenen Zyklen bei der Herstellung von Preformen;
- die Figuren 7a bis 7d: verschiedene Handlingssituationen zwischen Entnahmegreifer sowie Transfergreifer;
- die Figuren 8a bis 8d: verschiedene Handlingssituationen zwischen Transfergreifer sowie der Nachkühleinrichtung;
- die Figuren 9a und 9b: ein Schnitt bzw. Ausschnitt der Nachkühleinrichtung.

### Wege und Ausführung der Erfindung

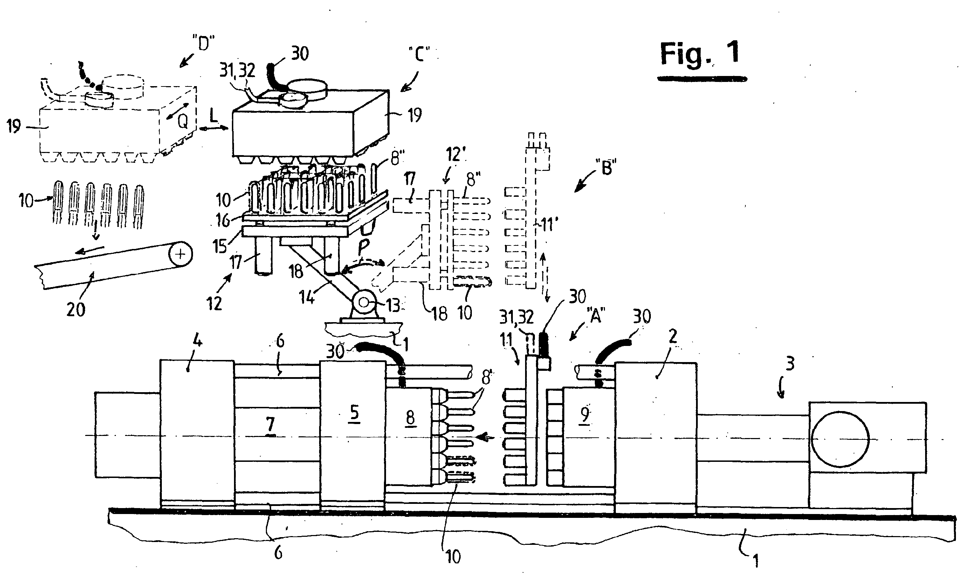

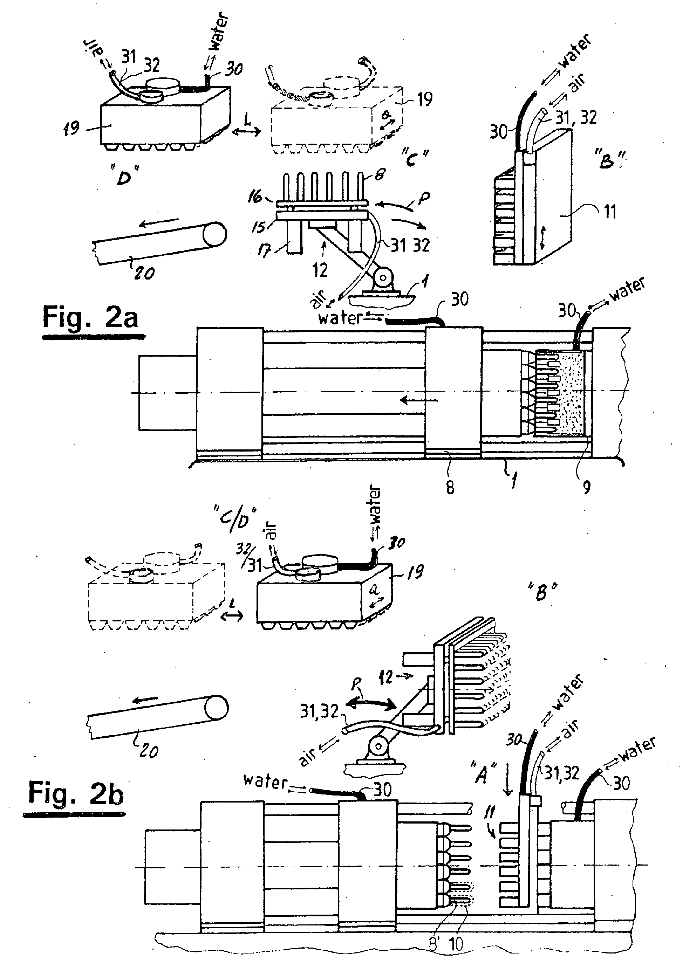

Die Figuren 1 sowie 2a und 2b zeigen eine ganze Spritzgiessmaschine für Preformen mit einem Maschinenbett 1, auf dem eine feste Formaufspannplatte 2 und eine Spritzeinheit 3 gelagert sind. Eine Abstützplatte 4 und eine bewegliche Formaufspannplatte 5 sind axial verschieblich auf dem Maschinenbett 1 abgestützt. Die feste Formaufspannplatte 5 und die Abstützplatte 4 sind durch vier Holme 6 miteinander verbunden, die die bewegliche Formaufspannplatte 5 durchsetzen und führen. Zwischen der Abstützplatte 4 und der beweglichen Formaufspannplatte 5 befindet sich eine Antriebseinheit 7 zur Erzeugung des Schliessdruckes. Die feste Formaufspannplatte 2 und die bewegliche Formaufspannplatte 5 tragen jeweils eine Formhälfte 8 und 9, in denen jeweils eine Vielzahl von Teilformen 8' und 9' angeordnet sind, die zusammen Kavitäten zur Erzeugung einer entsprechenden Zahl hülsenförmiger Spritzgiessteile bilden. Die Teilformen 8' sind als Dorne ausgebildet, an denen nach dem Öffnen der Formhälften 8 und 9 die hülsenförmigen Spritzgiessteile 10 haften. Die Spritzgiessteile befinden sich zu diesem Zeitpunkt noch in einem halb erstarrten Zustand und sind mit unterbrochenen Linien angedeutet. Die gleichen Spritzgiessteile 10 im fertig gekühlten Zustand sind in der Figur 1 links oben dargestellt, wo sie gerade aus einer Nachkühleinrichtung 19 ausgeworfen werden. Die oberen Holme 6 sind zum Zweck der besseren Darstellung der Einzelheiten zwischen den geöffneten Formhälften unterbrochen dargestellt.

In den Figuren 2a und 2b sind die vier wichtigsten Handlingsphasen für die Spritzgiessteile nach Abschluss des Giessprozess dargestellt:
**"A"** ist die Entnahme der Spritzgiessteile oder Preformen 10 aus den beiden Formhälften. Die noch halbstarren hülsenförmigen Teile werden dabei von einer in den Raum zwischen den geöffneten Formhälften und in die Position "A" abgesenkten Entnahmevorrichtung 11 aufgenommen und mit dieser in die Position "B" angehoben (Aufnahmevorrichtung 11' in Figur 1).
**"B*** ist die Übergabe-Stellung der Entnahmevorrichtung 11 mit den Preformen 10 an einen Transfergreifer 12 ("B" in Figur 1).
**"C"** ist die Übergabe der Preformen 10 von dem Transfergreifer 12 an eine Nachkühleinrichtung 19.
**"D"** ist der Abwurf der abgekühlten und in einen formstabilen Zustand gebrachten Preforms 10 aus der Nachkühleinrichtung 19.

Die Figur 1 zeigt sozusagen Momentaufnahmen der vier Hauptschritte für das Handling. In der Position "B" werden die senkrecht übereinanderliegend angeordneten, hülsenförmigen Spritzgiessteile 10 von dem Transfergreifer 12 bzw. 12' übernommen und durch Verschwenken der Transfervorrichtung in Richtung des Pfeiles P in eine Position, horizontal nebeneinander stehend, gemäss Phase "C", gebracht. Der Transfergreifer 12 besteht aus einem um eine Achse 13 schwenkbaren Haltearm 14, der eine Halteplatte 15 trägt, zu der im Parallelabstand eine Trägerplatte 16 für Zentrierdorne 8" angeordnet ist. Die Trägerplatte 16 ist mittels zweier Hydraulikeinrichtungen 17 und 18 parallel zur Halteplatte 15 ausstellbar, so dass in der Position "B" die hülsenförmigen Spritzgiessteile 10 aus der Entnahmevorrichtung 11 geholt und in der in die Position "C" geschwenkten Lage in die darüberliegende Nachkühleinrichtung 19 geschoben werden können. Die jeweilige Übergabe erfolgt durch Vergrösserung des Abstandes zwischen der Halteplatte 15 und der Trägerplatte 16. Die noch halbstarren, hülsenförmigen Spritzgiessteile 10 werden in der Nachkühleinrichtung 19 fertiggekühlt und danach, nach einer Verschiebung der Nachkühleinrichtung 19, in der Position "D" ausgestossen und auf ein Förderband 20 geworfen.

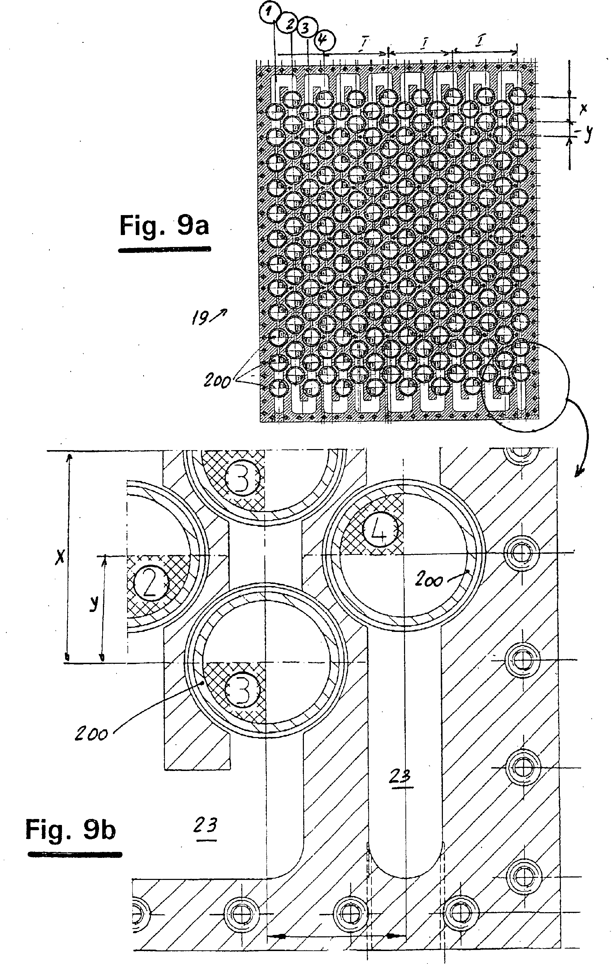

In den Figuren 2a und 2b sind zwei Situationen mit den jeweiligen Kühleingriffsmitteln ebenfalls schematisch, dargestellt. In der Figur 2a sind die beiden Formhälften 8 und 9 in geschlossenen Zustand, also in der eigentlichen Giessphase dargestellt, mit Verbindungsschläuchen für die Kühlmittel. Dabei bedeutet "water" Wasserkühlung und "air" Lufteinwirkung. Die grösste Temperaturabsenkung von etwa 280°C auf 80°C für die Spritzgiessteile 10 geschieht noch innerhalb der geschlossenen Formen 8 und 9, wozu ein enormer Kühiwasserdurchsatz sichergestellt werden muss. Die Entnahmevorrichtung 11 ist in Figur 2a bereits in einer Warteposition, womit das Ende der Spritzphase angedeutet ist. Das Bezugszeichen 30 ist die Wasserkühlung mit entsprechenden Zu- bzw. Abführleitungen, welche zur Vereinfachung mit Pfeilen angedeutet sind und als bekannt vorausgesetzt werden. Das Bezugszeichen 31/32 bezeichnet die Luftseite, wobei 31 für Einblasen resp. Druckluftzufuhr und 32 für Vakuum resp. Luftabsaugen steht. Damit erkennt man bereits auf der prinzipiellen Ebene die Einsatzmöglichkeiten von Luft (air) und Wasser (water). In den Spritzgiessformen 8 und 9 findet während dem Spritzgiessvorgang eine reine Wasserkühlung statt. Bei der Entnahmevorrichtung 11 kommen sowohl Luft wie Wasser zum Einsatz. Beim Transfer- bzw. Entnahmegreifer 12 besteht nur eine Lufteinwirkung. Bei der Nachkühlvorrichtung 19 dagegen kommen wiederum Luft und Wasser zum Einsatz. Die Figur 2b zeigt den Beginn. der Entnahme der Preformen 10 aus den offenen Formhälften. Nicht dargestellt sind die Hilfsmittel für das Abstossen der halbstarren Preforms von den Teileformen 8'. Ein weiterer wichtiger Punkt ist das Handling in dem Bereich der Nachkühlvorrichtung 19. Die Nachkühlvorrichtung kann während der Entnahmephase "A" gemäss Pfeil L horizontal unabhängig verfahren werden, von einer Aufnahmeposition (in Figur 2b mit ausgezogenen Linien dargestellt) in eine Abwurfposition (strichliert dargestellt). Dieser Arbeitsschritt ist in Figur 2b mit "C/D" bezeichnet. Wie mit den Figuren 9a und 9b noch erklärt wird, kann die Nachkühlvorrichtung 19 ein Mehrfaches an Fassungsvermögen gegenüber der Kavitätenzahl in den Spritzgiessformhälften aufweisen. Der Abwurf der fertig gekühlten Preforms 10 kann z.B. erst nach zwei, drei oder mehr Spritzgiesszyklen erfolgen, so dass entsprechend die Nachkühlzeit verlängert wird. Für die Übergabe der Preformen von dem Transfergreifer 12 an die Nachkühleinrichtung 19 kann letztere zusätzlich gemäss Pfeil a querverschoben und in die passende Position gesetzt werden.

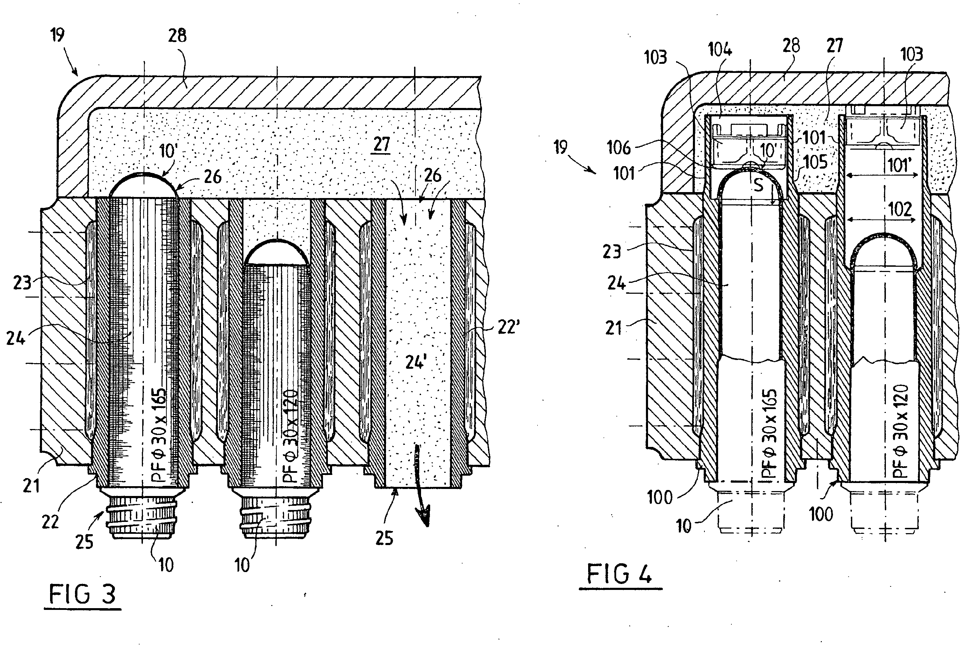

Die Figur 3 zeigt einen Ausschnitt einer Kühlvorrichtung des Standes der Technik mit einem Kühlblock 21, in dem eine Vielzahl von Wasserkühlrohren 22 (schwarz ausgefüllt) angeordnet sind. Vom Kühlblock 21 und von den Wasserkühlrohren 22 wird ein Hohlraum 23 umschlossen, der von Kühlwasser (strichliert markiert) durchströmt wird. Der Innenraum 24 der Wasserkühlrohre 22 dient zur Aufnahme der hülsenförmigen Spritzgiessteile 10 und ist nach oben konisch verjüngend ausgeformt. Am unteren Ende des Wasserkühlrohres 22 befindet sich die Ein- und Ausführöffnung 25, durch die die noch halbstarren Spritzgiessteile eingeführt und aus der die fertiggekühlten Spritzgiessteile 10 ausgestossen werden. Am oberen Ende des Wasserkühlrohres 22 befindet sich eine Öffnung 26 zu einem Luftraum 27, der von einem Deckel 28 umschlossen ist. Die hülsenförmigen Spritzgiessteile 10 stellen sogenannte Preforms zur Herstellung von PET-Flaschen dar, wobei in dem linken Wasserkühlrohr eine Preform der Grösse Ø PF 30 x 165 und in dem mittleren Wasserkühlrohr eine kürzere Preform der Grösse PF Ø 30 x 120 angeordnet ist. Die noch halbstarren Spritzgiessteile werden nach dem Einschieben in die Wasserkühlrohre durch einen im Luftraum 27 herrschenden Unterdruck vollständig eingezogen, so dass das Spritzgiessteil in engen Kühlkontakt mit der Innenfläche des Wasserkühlrohres 22 gelangt. Nach Beendigung des Kühlvorgangs werden die nunmehr starren und formstabilen Spritzgiessteile durch Überdruckbeaufschlagung des Luftraums 27 ausgestossen. Bei dieser Kühlvorrichtung nach dem Stand der Technik bzw. Figur 3 besteht das Problem, dass aufgrund von Unregelmässigkeiten in der Fertigung der Formkavitäten für die Spritzgiessteile und der Innenkontur der Wasserkühlrohre ein oder mehrere Spritzgiessteile verklemmen oder bereits gegen Ende der Kühlphase durch ihr Eigengewicht aus dem Wasserkühlrohr fallen können. Dies gilt besonders bei Lösungen, bei denen eine Kühlvorrichtung, wie in Figur 3 dargestellt ist, für den Abwurf in eine horizontale Lage gebracht wird. Wird im Luftraum von Unterdruck auf Überdruck geschaltet, um die fertig gekühlten Spritzgiessteile auszustossen, kann sich aufgrund der grossen Strömungsquerschnitte durch vorzeitig freigewordene Wasserkühlrohre 22' kein ausreichender Druck zum Ausstossen der restlichen Spritzgiessteile aufbauen. Der Produktionszyklus wird durch nicht entleerte Wasserkühlrohre unterbrochen, bis alle Hülsen, gegebenenfalls von Hand, frei gemacht werden.

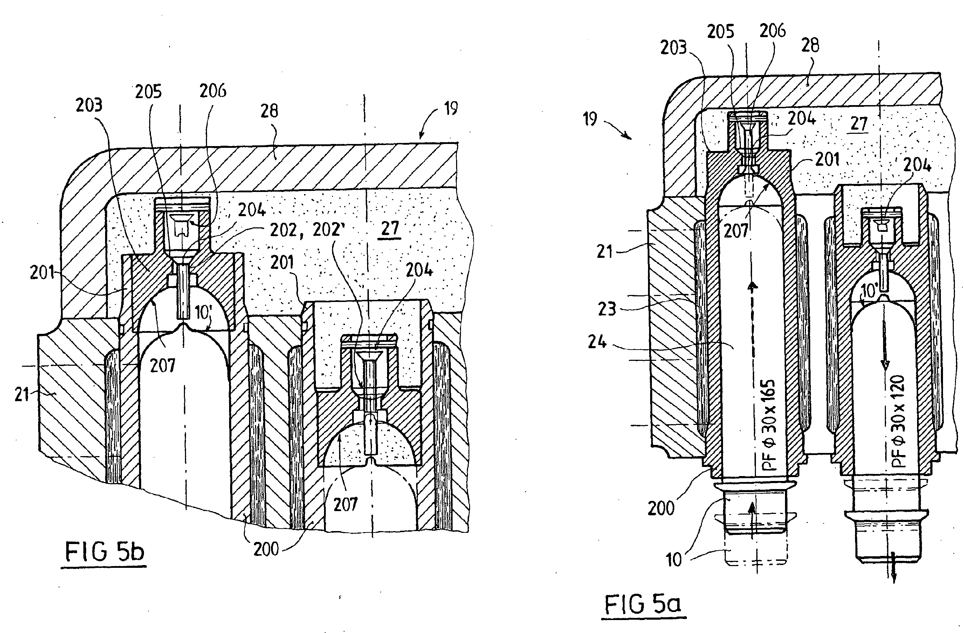

Die Figuren 4, 5a und 5b zeigen Ausführungsformen, bei denen erfindungsgemäss ein gleichzeitiges Ausstossen aller Spritzgiessteile 10 am Ende der Kühlphase sichergestellt wird. Die Ausführungsform nach Figur 4 zeigt ein Wasserkühlrohr 100, die an ihrem oberen Ende ein rohrförmiges Ansatzstück 101 aufweist, das in den Luftraum 27 ragt. Der Innendurchmesser 101' des Ansatzstücks 101 ist grösser als der Innenraum 102 des Wasserkühlrohres 100. Im Ansatzstück 101 befindet sich ein mechanisch verschiebbares Element in Form eines Kolbens 103, dessen Aussendurchmesser um genügendes Spiel geringer ist als der Innendurchmesser 101' des Ansatzstücks 101, so dass ein definierter Luftspalt gegeben ist. Dieser Luftspalt bildet einen gedrosselten Durchgangskanal 104 zwischen Innenraum des Wasserkühlrohres 100 und dem Luftraum 27. Der Übergang vom grösseren Innenraum des Ansatzstücks 101 zum kleineren Innenraum des Wasserkühlrohres 100 ist in Form eines Ventilsitzringes 105 ausgebildet, zu dem der Kolben 103 einen passenden Ventilsitzring 106 aufweist. In der Kühlphase ragt das in das Wasserkühlrohr 100 eingezogene Spritzgiessteil 10 mit seinem halbkugelförmigen Boden 10' oberhalb des Ventilsitzrings 105 in das Ansatzstück 101. Bei Unterdruckbeaufschlagung des Luftraumes 27 pflanzt sich der Unterdruck über den Durchgangskanal 104 in den Innenraum des Wasserkühlrohres 100 fort und bewirkt ein Einziehen des Spritzgiessteils 10 in das Wasserkühlrohr 100. Nach Beendigung der Kühlphase wird im Luftraum 27 von Unterdruck auf Überdruck geschaltet. Das Spritzgiessteil wird durch den Luftdruck aus dem Wasserkühlrohr ausgestossen, wobei sich das Kolbenelement 103 nach unten bewegt. Mit dem Anschlag des Kolbens 103 am Ventilsitzring 105 wird zum einen die Bewegung des Kolbens 103 begrenzt, zum anderen wird jeglicher Luftaustritt vom Luftraum 27 über das entsprechende Wasserkühlrohr 100 gestoppt. Vor dem anschliessenden Befüllen des Wasserkühlrohres 100 mit neuen, noch halbstarren Spritzgiessteilen 10 wird der Kolben 103 durch Unterdruckbeaufschlagung des Luftraumes 27 wieder hochgehoben, wobei gleichzeitig der ringförmige Durchgangskanal 104 zwischen Kolben 103 und Innenwandung des Ansatzstücks 101 wieder geöffnet wird, so dass sich der Unterdruck in den Innenraum des Wasserkühlrohres 100 fortpflanzen und das vollständige Einziehen der Spritzgiessteile 10 bewirken kann. Die Ausführungsformen nach den Figuren 5a und 5b zeigen eine bevorzugte Ausgestaltung mit einem Wasserkühlrohr 200, die an ihrem oberen Ende ein Ansatzstück 201 aufweist, das mit einem, eine Führungsöffnung 202 aufweisenden Verschlusskörper 203 versehen ist. Dieser ist im unteren Bereich mit einer Wölbung 207 versehen, in die das Spritzgiessteil 10 mit seinem halbkugelförmigen Boden 10' eintaucht. In der Führungsöffnung 202 ist ein dünneres Kolbenelement in Form eines Ventilstiftes 204 in axialer Richtung mechanisch verschiebbar geführt, wobei in der zylindrischen Durchgangsöffnung 202 ein Durchgangskanal 202' in Form von Nuten ausgebildet ist. Die Nuten stellen (rechts in Figur 5b) Durchgangspassagen für einen Luftaustausch zwischen dem Luftraum 27 und dem Innenraum des Wasserkühlrohres 200 innerhalb der Wölbung 207 dar und gewährleisten einen Druckaustausch (als Überdruck oder Unterdruck) zwischen dem Raum 27 und dem Inneren des Wasserkühlrohres 200 (innerhalb der Wölbung 207). Die dem Luftraum 27 zugewandte Seite der Durchgangsöffnung 202 weist eine kegelstumpfförmige Erweiterung 205 auf, in die der Ventilstift 204 mit einem entsprechend ausgebildeten kegelförmigen Ventilsitz 206 abdichtend zur Auflage kommen kann (links in Figur 5b mit ausgezogenen Strichen). Für das Befüllen des Wasserkühlrohres 200 mit noch halbstarren Spritzgiessteilen 10 wird durch die Unterdruckbeaufschlagung des Luftraumes 27 der Ventilstift 204 nach oben gezogen (Figur 5b rechts). Der Unterdruck pflanzt sich vom Luftraum 27 über die Nuten 202' in der Durchgangsöffnung 202 zum Innenraum des Wasserkühlrohres 200 fort und bewirkt das vollständige Einziehen des Spritzgiessteils 10 (Figur 5a links). Nach Beendigung der Kühlphase wird im Luftraum 27 von Unterdruck auf Überdruck geschaltet. Der Ventilstift 204 folgt dem fertig gekühlten Spritzgiessteil mechanisch ein kurzes Wegstück. Der Verschiebeweg des Ventilstiftes 204 wird durch Anschlag seines kegelförmigen Ventilsitzes 206 auf der kegelstumpfförmigen Erweiterung 205 der Durchgangsöffnung 202 begrenzt und ein weiterer Durchtritt von Druckluft vom Luftraum 27 zu dem Innenraum des Wasserkühlrohres abgesperrt. Ein Restdruckluftpolster zwischen der inneren Wölbung 207, des Wasserkühlrohres 200 sowie dem äusseren halbkugelförmigen Boden 10' bewirkt in der Folge das vollständige Ausstossen des Spritzgiessteils 10 mit entsprechendem Luftdruck. Mit den Ausführungsformen gemäss den neuen Lösungen wird sichergestellt, dass bei Überdruckbeaufschlagung des Luftraumes 27 der Überdruck im Luftraum 27 in der erforderlichen Höhe stets erhalten bleibt oder sogar gesteigert werden kann und alle Spritzgiessteile 10 nach der Beendigung des Kühlvorgangs mit einer optimalen Ausstosskraft beaufschlagt werden.

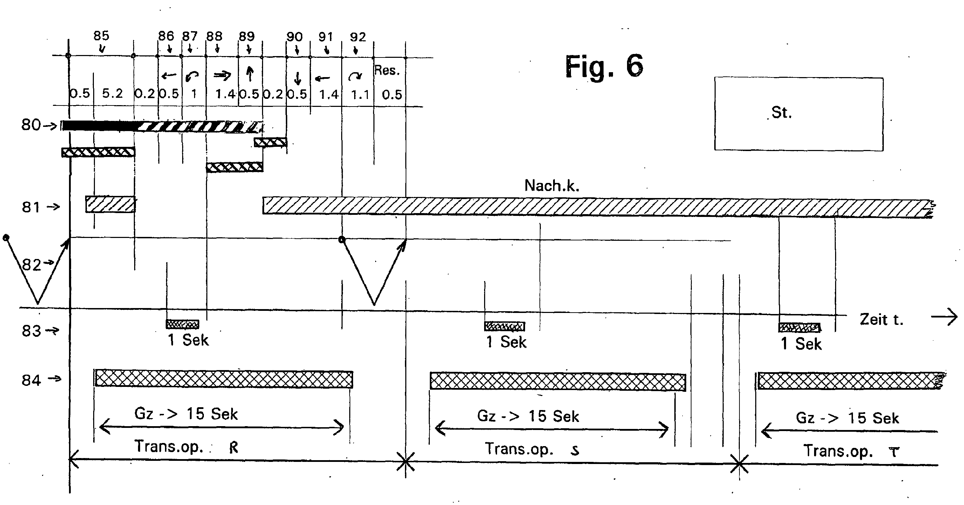

Die Figur 6 zeigt beispielhaft die zyklischen Schritte in zeitlicher Hinsicht. Die horizontalen Balken 80 stellen die Luftkühlung und die horizontalen Balken 81 die Wasserkühlung dar. Die unterste zeitliche Massangabe Trans.op bedeutet eine erste Transferoperation R, eine zweite S, eine dritte T, usw. Dargestellt sind drei Transferoperationen und darüber entsprechend Gz - 15 Sek. je ein Giesszyklus 84 mit einer Deuer von jeweils 15 Sekunden. Das Bezugszeichen 83 bedeutet Abwurf der fertig gekühlten Preformen 10, was etwa eine Sekunde beansprucht. Das Bezugszeichen 82 stellt die Entnahme der halbstarren Preformen 10 aus den Formhälften dar. Eine einzelne, vollständige Transferoperation ist im linken oberen Bildteil in die wichtigsten Teilschritte aufgegliedert. Es bedeuten 85 Entnahme, 86 Ausfahren, 87 Transfergreifer/Schwenken, 88 Kühlblock auf, 89 Kühlblock laden, 90 Kühlblock vakumieren, 91 Kühlblock wegfahren, 92 Transfergreifer schwenken. Unter den Bezugszeichen ist mit den Zahlen 0.5, 5.2, usw. eine ungefähre Zeitangabe in Sekunden für die Einzelschritte angegeben. St. steht für die Steuermittel für die Anlage bzw. die entsprechende Funktionseinheit.

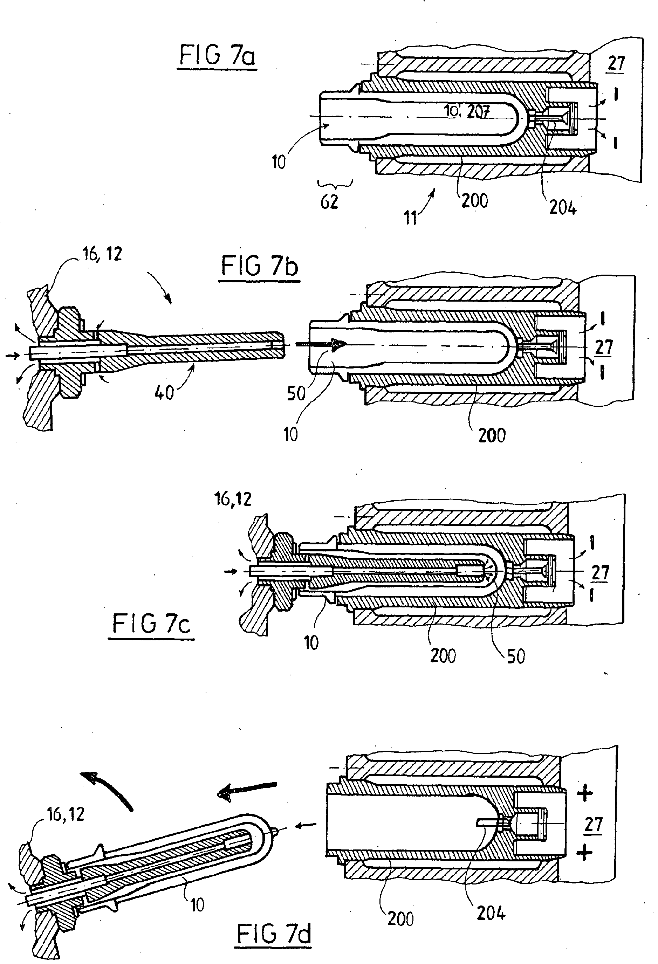

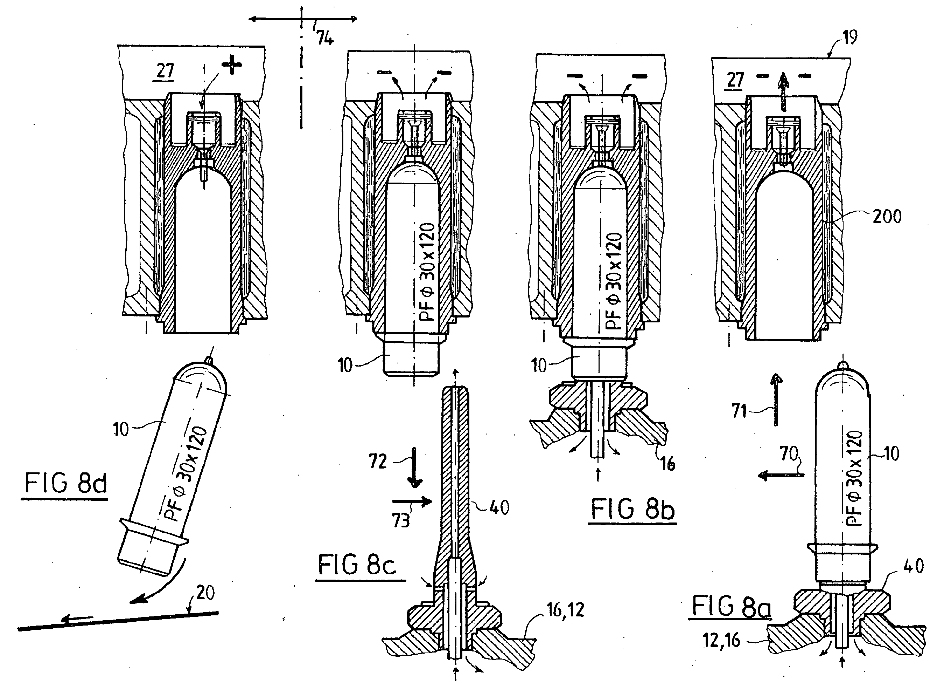

Die Figuren 7a bis 7d und 8a bis 8d zeigen die besonderen Übergänge beim Handling von der Entnahmevorrichtung 11 zu dem Transfergreifer 12 einerseits sowie dem Transfergreifer 12 zu der Nachkühleinrichtung 19 anderseits. In der Figur 7a ist die Preform 10 vollständig von der Entnahmevorrichtung 11 übernommen. Damit alle Preformen 10 vollständig in dem Wasserkühlrohr 200 bzw. der Wölbung 207 anliegen, ist in dem Luftraum 27 Unterdruck eingestellt, was mit den Minuszeichen angedeutet ist. Der Ventilstift 204 ist angehoben, so dass der Unterdruck sich auf den halbkugelförmigen, äusseren Boden 10' auswirkt und diesen voll in die Wölbung 207 einsaugt. Die Preformen sind dadurch fest in dem Wasserkühlrohr 200, gleichsam auf Anschlag gehalten. In der Figur 7b fahren nun die Luftdüsen bzw. Zentrierdorne durch Vorschieben der Halteplatte 16 in die Preformen 10 ein. Saugluft und Blasluft sind entsprechend Figur 6f aktiviert. Im Luftraum 27 bleibt vorerst Unterdruck. Nachdem die Blasdorne vollständig eingefahren sind, beginnt die stärkste Kühlphase (7c), wobei von aussen mit Wasser und von innen mittels Luft, entsprechend Figur 6e, über einige Sekunden eingewirkt wird. Nach Ablauf, z.B. von etwa 5 Sekunden, werden die Luftverhältnisse umgekehrt. In dem Luftraum 27 wird schlagartig auf Überdruck (+) geschaltet, so dass die Preform 10 ausgestossen und nach der ersten Ausstossbewegung der Ventilstift 204 sofort den Luftabströmquerschnitt verschliesst. Auf Seiten der Blasdorne 40 wird, koordiniert mit der Umstellung der Druckverhältnisse im Luftraum 27, auf Vakuum entsprechend Figur 6d geschaltet, so dass die Preformen 10 mit maximaler Saugkraft auf den Blasdornen 40 gehalten werden. Die Stosskraft der Druckluft im Luftraum 27 ergänzt die Saugkraft auf der Gegenseite.

In der Figur 8a ist die nachfolgende Phase dargestellt. Der Transfergreifer 12 steht mit der Trägerplatte 16 vor dem Abschluss der Verschwenkbewegung, wie mit Pfeil 70 angedeutet ist. Gleichzeitig beginnt die Trägerplatte 16 durch Betätigung einer Pneumatik- oder Hydraulikeinrichtung, sich in Richtung Nachkühleinrichtung 19 zuzubewegen und schiebt die Preformen 10 in die Wasserkühlrohre 200 der Nachkühleinrichtung 19. Das Einschieben der Preformen ist insofern nicht besonders heikel, als dass diese, gestützt durch die mechanischen Bewegungskräfte der Trägerplatte 16, zwangsweise erfolgt. In dem Luftraum 27 wurde auf Unterdruck geschaltet, so dass allein durch die Saugkräfte des Unterdruckes im Luftraum 27 die Preformen auch hier auf Anschlag festgehalten werden. Je nach gewählter Zyklusdauer kann die Luftkühlwirkung in der Phase von Figur 8a bis 8c optimiert werden. Die Trägerplatte 16 muss wieder in die Übernahmeposition (B in Figur 1) zurückfahren. Die Blasdorne 40 fahren gemäss Figur 8c entsprechend Pfeil 72 aus den Preformen 10 und bewegen sich nach Pfeil 73 in umgekehrter Richtung zu der Figur 8a wieder zurück in die Position B. In Figur 8c sind die Preformen 10 in den Wasserkühtrohren 200 noch durch den Unterdruck (-) festgehalten. Die Figur 8d stellt den Auswurf der Preformen 10 als letzten Akt der Nachkühlung dar. Wie bereits zuvor erwähnt, können zwischen der Situation nach Figur 8c und 8d ein, zwei bzw, mehrere Giesszyklen sein bzw. die Nachkühlung entsprechend lange dauern. Für den Ausstoss wird in dem Luftraum 27 sofort auf Druck umgestellt, so dass die Preformen 10 durch den Luftdruck ausgestossen und auf ein Band 20 abgeworfen werden. Die Nachkühleinrichtung 19 wird entsprechend Pfeil 74, sinngemäss zu den Figuren 2a und 2b, verfahren.
Ein Teilziel der neuen Lösung lag darin, die Nachkühlzeit von dem eigentlichen Giesszyklus, soweit erforderlich, unabhängig zu machen. Zu diesem Zweck weist die Nachkühleinrichtung gemäss Figuren 9a und 9b mehrere parallel angeordnete Reihen ①, ②, ③, ④ auf. Beim gezeigten Beispiel sind in einer Reihe jeweils 12 Wasserkühlrohre 200 für die Aufnahme je einer Preform. Die Wasserkühlrohre 200 können in Bezug auf die Verhältnisse in den Giessformteilungen sehr viel enger angeordnet werden. Es wird deshalb nicht nur mehrere parallele Reihen, sondern zusätzlich eine Versetzung der Reihen vorgeschlagen, wie aus dem Schnitt der Figuren 9a und 9b mit den Massangaben x resp. y zum Ausdruck kommt. Dies bedeutet, dass für einen ersten Giesszyklus die Kühlrohre mit Nummern ①, für einen zweiten Giesszyklus die Kühlrohre mit Nummern ②, usw. versehen werden. Sind beim Beispiel mit vier Parallel-Reihen auch alle Reihen mit Nr. ④ gefüllt, werden die Reihen mit Nr. ①, wie beschrieben, als erste ausgestossen und auf das Förderband 20 abgeworfen. Der Rest folgt über die ganze Produktionszeit folgerichtig. Im gezeigten Beispiel entspricht die gesamte Nachkühlzeit etwa vier mal der Giesszeit. Wichtig ist dabei, dass die Kühlräume 23 für die Wasserkühlung optimal angeordnet sind, damit die Wasserkühlung bei allen Kühlrohren möglichst einheitlich und bestmöglich wirkt. Anderseits müssen die Luftdruck- bzw. Unterdruckverhältnisse in der Nachkühleinrichtung reihenweise steuerbar sein, damit zu einem bestimmten Zeitpunkt alle Reihen ① oder ②, usw. gleichzeitig aktiviert werden können. Eine entsprechende Reihenanordnung ist in der Figur 6a angedeutet.

## Patentansprüche

1. Verfahren für das chargenweise Nachkühlen einer grösseren Zahl von einseitig mit einem Boden verschlossenen, hülsenförmigen Spritzgiessteilen (10), welche nach dem Spritzvorgang den Giessformen (8, 9) entnommen und nachgekühlt werden und dabei in Wasserkühlrohre eines Nachkühlers (19) eingeschoben und wieder ausgestossen und von einem halbstarren Zustand beim Öffnen der Giessformhälften (8, 9) in einen formstabilen Lagerzustand gebracht und einem Weitertransport übergeben werden, wobei die Wasserkühlrohre des Nachkühlers in parallelen Reihen angeordnet sind,
**dadurch gekennzeichnet,**
**dass** die Reihen versetzt angeordnet sind, wobei durch entsprechendes Querschieben und Längsschieben der Nachkühler (19) zwei oder mehrere Chargen von Spritzgiessteilen (10) von je einem Spritzgiesszyklus aufnehmen kann, und die Füllung und Kühlung einzelner Chargen je eines Giesszyklusses in ersten, zweiten, usw. Reihen zyklisch erfolgt.

2. Verfahren nach Anspruch 1,
**dadurch gekennzeichnet,**
**dass** die Nachkühlzeit unabhängig von dem eigentlichen Giesszyklus gesteuert wird, und vorzugsweise etwa vier mal der Giesszeit entspricht.

3. Verfahren nach Anspruch 1 oder 2,
**dadurch gekennzeichnet,**
**dass** die Nachkühlrohre (22, 100, 200) in mehreren, insbesondere vier parallel und versetzten Reihen (1, 2, 3, 4) angeordnet sind, welche für das Einschieben und Ausstossen aktivierbar sind.

4. Verfahren nach Anspruch 2 bis 3,
**dadurch gekennzeichnet,**
**dass** der Nachkühler (19) den Wasserkühlrohrreihen zugeordnete mit Überdruck oder Unterdruck beaufschlagbare Lufträume (27) aufweist, wobei die Luftdruck- bzw. Unterdruckverhältnisse reihenweise gesteuert werden.

5. Verfahren nach einem der Ansprüche 1 bis 4,
**dadurch gekennzeichnet,**
**dass** für einen ersten Giesszyklus erste Reihen (Nummern 1) für ein zweiten Giesszyklus, zweite Reihen (Nummern 2) für einen dritten Giesszyklus, dritte Reihen (Nummern 3) und für einen vierten Giesszyklus vierte Reihen (Nummern 4) gefüllt und nach dem Füllen der Reihen, die Reihen mit Nr. 1 ausgestossen und dem Weitertransport übergeben werden, mit anschliessend folgerichtigem Zyklusablauf.

6. Verfahren für das chargenweise Nachkühlen einer grösseren Zahl von einseitig mit einem Boden verschlossenen, hülsenförmigen Spritzgiessteilen (10), insbesondere Preformen, wobei jede Preform (10) ein Gewindeteil mit einem offenen Ende, ein rohrförmiges Teil und ein domartig geformtes Bodenende aufweist, welche nach dem Spritzvorgang den Giessformen (8, 9) entnommen und nachgekühlt werden und dabei in Wasserkühlrohre eines Nachkühlers (19) eingeschoben und wieder ausgestossen und von einem halbstarren Zustand beim Öffnen der Formhälften (8, 9) in einen formstabilen Lagerzustand gebracht und einem Weitertransport übergeben werden, nach Anspruch 1,
**dadurch gekennzeichnet,**
**dass** die Wasserkühlrohre (22, 100, 200) wassergekühlte konkave Bodenteile (207) zur Kühlung des domartig geformten Bodenendes der Spritzgiessteile (10) aufweisen, wobei die Spritzgiessteile (10) mechanisch in die Wasserkühlrohre eingefügt und durch die Erzeugung einer Saugkraft auf die Giessteile vollständig in die Wasserkühlrohre (22, 100, 200) eingesaugt werden, so dass die Bodenenden der Spritzgiessteile (10) während der Nachkühlung mit dem konkaven Bodenteil (207) der Wasserkühlrohre (22, 100, 200) in Kontakt bleiben, wobei die Wasserkühlrohre (22, 100, 200) des Nachkühlers (19) in parallelen und versetzten Reihen angeordnet sind, wobei durch entsprechendes Querschieben und Längsschieben der Nachkühler (19) zwei oder mehrere Chargen von Spritzgiessteilen (10) von je einem Spritzgiesszyklus aufnehmen kann, wobei die Füllung und Kühlung einzelner Chargen je eines Giesszyklusses in ersten, zweiten, usw. Reihen zyklisch erfolgt.

7. Vorrichtung für das chargenweise Nachkühlen einer grösseren Zahl von einseitig mit einem Boden verschlossenen, hülsenförmigen Spritzgiessteilen (10), welche nach dem Spritzvorgang den Formen (8, 9) entnommen und nachgekühlt werden und dabei in Wasserkühlrohre (22, 100, 200) eines Nachkühlers eingeschoben und wieder ausgestossen und von einem halbstarren Zustand beim Öffnen der Formhälften (8, 9) in einen formstabilen Lagerzustand gebracht und einem Weitertransport übergeben werden, wobei die Wasserkühlrohre des Nachkühlers in parallelen Reihen angeordnet sind,
**dadurch gekennzeichnet,**
**dass** die Reihen versetzt angeordnet sind, und die Füllung und Kühlung einzelner Chargen durch eine entsprechende Quer- und Längsverschiebung des Nachkühlers (19) für je einen Spritzgiesszyklus in ersten, zweiten, usw. Reihen durchführbar ist.

8. Vorrichtung nach Anspruch 7,
**dadurch gekennzeichnet,**
**dass** für das Einschieben der Spritzgiessteile (10) in die Wasserkühlrohre (22, 100, 200) des Nachkühlers quer- und längsverschiebbar ausgebildet ist, zur zyklischen Füllung und Kühlung einzelner Chargen in ersten, zweiten usw. Reihen.

9. Vorrichtung nach Anspruch 7 oder 8,
**dadurch gekennzeichnet,**
**dass** die Wasserkühlrohre (22, 100, 200) in jeweils mehreren insbesondere vier zueinander versetzen Reihen (1, 2, 3, 4) angeorndet sind, welche reihenweise steuerbar sind, damit jeweils alle Reihen 1 oder 2 usw. für das Einschieben und Ausstossen gleichzeitig aktivierbar sind.

10. Vorrichtung nach einem der Ansprüche 7 bis 9,
**dadurch gekennzeichnet,**
**dass** der Nachkühler (19) den Wasserkühlrohrreihen zugeordnete, auf der Einschiebeseite der Wasserkühlrohre (22, 100, 200) entgegengesetzt, mit Überdruck oder Unterdruck beaufschlagbare Lufträume (27) aufweist, wobei die Luftdruck- bzw. Unterdruckverhältnisse reihenweise steuerbar sind.

11. Vorrichtung nach einem der Ansprüche 7 bis 10,
**dadurch gekennzeichnet,**
**dass** mit der Versetzung der parallelen Reihen in Bezug auf die Giessformteilungen eine sehr viel engere Anordnung der Wasserkühlrohre (22, 100, 200) ausgenutzt wird.

12. Vorrichtung für das chargenweise Nachkühlen einer grösseren Zahl von einseitig mit einem Boden verschlossenen, hülsenförmigen Preformen (10), wobei jede Preform (10) ein Gewindeteil mit einem offenen Ende, ein rohrförmiges Teil und ein domartig geformtes Bodenende aufweist, welche nach dem Spritzvorgang den Giessformen entnommen und nachgekühlt werden und dabei in Wasserkühlrohre (22, 100, 200) eines Nachkühlers (19) eingeschoben und wieder ausgestossen und von einem halbstarren Zustand beim Öffnen der Formhälfen (8, 9) in einen formstabilen Lagerzustand gebracht und einem Weitertransport übergeben werden, nach Anspruch 7,
**dadurch gekennzeichnet,**
**dass** die Wasserkühlrohre (22, 100, 200) wassergekühlte konkave Bodenteile aufweisen zur Kühlung des domartig geformten Bodenendes der Spritzgiessteile (10), wobei die Spritzgiessteile (10) durch mechanische Mittel in die Wasserkühlrohre (22, 100, 200) einfügbar und durch die Erzeugung einer Saugkraft auf die Giessteile vollständig in die Wasserkühlrohre (22, 100, 200) einsaugbar sind, zur Erzeugung eines Kühlkontaktes der Bodenenden der Spritzgiessteile (10) mit dem konkaven Bodenteil der Wasserkühlrohre (22, 100, 200), wobei die Wasserkühlrohre (22, 100, 200) in parallelen und versetzten Reihen in dem Nachkühler (19) angeordnet sind, und die Füllung und Kühlung einzelner Chargen je eines Spritzgiesszyklusses in ersten, zweiten, usw., Reihen durchführbar ist.

## Claims

1. Method for aftercooling in batches of a relatively large number of sleeve-shaped injection-moulded parts (10), which are closed on one side by a base, and which are removed from the moulds (8, 9) and aftercooled after the injection process and inserted into water-cooling tubes of an aftercooler (19) and ejected again and are brought into a dimensionally stable storage state from a semi-solid state when the mould halves (8, 9) are opened, and are handed over for onward conveying the water-cooling tubes of the aftercooler being arranged in parallel rows, **characterised in that** the rows are arranged in an offset manner, wherein, as a result of corresponding transverse displacement and longitudinal displacement, the aftercooler (19) is able to receive two or more batches of injection-moulded parts (10) from a respective injection-moulding cycle, and the filling and cooling of individual batches of each moulding cycle is carried out cyclically in first, second, etc. rows.

2. Method according to claim 1, **characterised in that** the aftercooling time is controlled independently of the actual moulding cycle and preferably corresponds to approximately four times the moulding time.

3. Method according to either claim 1 or claim 2, **characterised in that** the aftercooling tubes (22, 100, 200) are arranged in a plurality of, in particular four, parallel and offset rows (1, 2, 3, 4) which may be activated for the insertion and ejection.

4. Method according to claims 2 and 3, **characterised in that** the aftercooler (19) comprises air chambers (27) which are associated with the rows of water-cooling tubes and may be acted on by excess pressure or a vacuum, the air pressure or vacuum conditions being controlled by the row.

5. Method according to any one of claims 1 to 4, **characterised in that** for a first moulding cycle first rows (numbers 1) are filled, for a second moulding cycle second rows (numbers 2) are filled, for a third moulding cycle third rows (numbers 3) are filled, and for a fourth moulding cycle fourth rows (numbers 4) are filled, and after the rows have been filled, the No. 1 rows are ejected and handed over for onward conveying, with a subsequent consistent cycle sequence.

6. Method for the aftercooling in batches of a relatively large number of sleeve-shaped injection-moulded parts (10), in particular preforms, which are closed on one side by a base, each perform (10) comprising a threaded part with an open end, a tubular part and a dome-shaped base end, which are removed from the moulds (8, 9) after the injection process, aftercooled and inserted into water-cooling tubes of an aftercooler (19) and are ejected again and brought into a dimensionally stable storage state from a semi-solid state when the mould halves (8, 9) are opened, and are handed over for onward conveying, according to claim 1, **characterised in that** the water-cooling tubes (22, 100, 200) comprise water-cooled concave base parts (207) for cooling the dome-shaped base end of the injection-moulded part (10), the injection-moulded part (10) being mechanically inserted into the water-cooling tubes and, as a result of the generation of a suction pressure acting on the moulded parts, are completely drawn into the water-cooling tubes (22, 100, 200), so the base ends of the injection-moulded parts (10) remain in contact with the concave base part (207) of the water-cooling tubes (22, 100, 200) during aftercooling, the water-cooling tubes (22, 100, 200) of the aftercooler (19) being arranged in parallel and offset rows, wherein, as a result of corresponding transverse displacement, the aftercooler (19) is able to receive two or more batches of injection-moulded parts (10) from a respective injection-moulding cycle, the filling and cooling of individual batches of each moulding cycle being carried out cyclically in first, second etc. rows.

7. Device for aftercooling in batches of a relatively large number of sleeve-shaped injection-moulded parts (10), which are closed on one side by a base, and which are removed from the moulds (8, 9) and aftercooled after the injection process and inserted into water-cooling tubes of an aftercooler and ejected again and are brought into a dimensionally stable storage state from a semi-solid state when the mould halves (8, 9) are opened, and are handed over for onward conveying, the water-cooling tubes (22, 100, 200) of the aftercooler being arranged in parallel rows, **characterised in that** the rows are arranged in an offset manner, and the filling and cooling of individual batches may be carried out in first, second, etc. rows, by means of corresponding transverse displacement and longitudinal displacement of the aftercooler (19), for each injection-moulding cycle.

8. Device according to claim 7, **characterised in that** for inserting the injection-moulded parts (10) into the water-cooling tubes (22, 100, 200), the aftercooler is configured so as to be transversely and longitudinally displaceable for the cyclic filling and cooling of individual batches in first, second, etc. rows.

9. Device according to either claim 7 or claim 8, **characterised in that** the water-cooling tubes (22, 100, 200) are each arranged in a plurality of, in particular four, rows (1, 2, 3, 4), which are offset from each other, and may be controlled by the row so that in each case all rows 1 or 2, etc. may be activated simultaneously for inserting and ejecting.

10. Device according to any one of claims 7 to 9, **characterised in that** the aftercooler (19) comprises air chambers (27) which are associated with the rows of water-cooling tubes and may be acted on, opposite the end at which the water-cooling tubes are inserted, by excess pressure or a vacuum wherein the air pressure or vacuum conditions may be controlled by the row.

11. Device according to any one of claims 7 to 10, **characterised in that** as a result of the parallel rows being offset relative to the divisions of the mould, a much narrower arrangement of the water-cooling tubes (22, 100, 200) is employed.

12. Device for the aftercooling in batches of a relatively large number of sleeve-shaped preforms (10), which are closed on one side by a base, each perform (10) comprising a threaded part with an open end, a tubular part and a dome-shaped base end, which are removed from the moulds after the injection process, aftercooled and inserted into water-cooling tubes (22, 100, 200) of an aftercooler (19) and are ejected again and brought into a dimensionally stable storage state from a semi-solid state when the mould halves (8, 9) are opened, and are handed over for onward conveying, according to claim 7, **characterised in that** the water-cooling tubes (22, 100, 200) comprise water-cooled concave base parts for cooling the dome-shaped base end of the injection-moulded parts (10), wherein the injection-moulded parts (10) may be inserted into the water-cooling tubes (22, 100, 200) by mechanical means and may be completely drawn into the water-cooling tubes (22, 100, 200) as a result of the generation of a suction pressure acting on the moulded parts, for causing a cooling contact of the base ends of the injection-moulded parts (10) to the concave base part of the water-cooling tubes (22, 100, 200), the water-cooling tubes (22, 100, 200) being arranged in parallel and offset rows in the aftercooler (19), and wherein the filling and cooling of individual batches of each injection-moulding cycle may be carried out in first, second, etc. rows.

## Revendications

1. Procédé de refroidissement par lots d'un grand nombre de pièces en forme d'enveloppes moulées par injection (10) fermées d'un côté par un fond, qui sont prélevées et refroidies selon le procédé d'injection des moules (8, 9) et de ce fait sont introduites dans des tuyaux de refroidissement à eau d'un réfrigérant complémentaire (19) et de nouveau éjectées et amenées d'un état semi-rigide lors de l'ouverture des demi-moules (8, 9) à un état de stockage indéformable et sont transférées à un transport ultérieur, dans lequel les tuyaux de refroidissement à eau du réfrigérant complémentaire sont disposés en rangées parallèles,
**caractérisé en ce**
**que** les rangées sont disposées décalées, sachant qu'un glissement transversal et un glissement longitudinal du réfrigérant complémentaire (19) permettent de réceptionner deux ou plusieurs lots de pièces moulées par injection (10)à partir de chaque cycle de moulage par injection et le remplissage et le refroidissement des lots individuels de chaque cycle de moulage par injection se produisent de manière cyclique dans la première rangée, la deuxième rangée etc.

2. Procédé selon la revendication 1,
**caractérisé en ce que**
le temps de refroidissement complémentaire est commandé indépendamment du cycle de moulage proprement dit et correspond de préférence à environ quatre fois le temps de moulage

3. Procédé selon la revendication 1 ou 2,
**caractérisé en ce que**
les tuyaux de refroidissement complémentaire (22, 100, 200) sont disposés dans plusieurs rangées et de préférence quatre rangées en parallèle et décalées (1, 2, 3, 4), qui peuvent être activées pour l'insertion et l'éjection.

4. Procédé selon la revendication 2 ou 3,
**caractérisé en ce que**
le réfrigérant complémentaire (19) comporte des espaces aériens (27) ajoutés aux rangées de tuyaux de refroidissement à eau et pouvant être soumis à une surpression ou à une dépression, sachant que les conditions de pression ou de dépression d'air sont commandées par rangées.

5. Procédé selon l'une des revendications 1 à 4,
**caractérisé en ce que**
pour un premier cycle de moulage les premières rangées (numéros 1) pour un deuxième cycle de moulage, les deuxièmes rangées (numéros 2) pour un troisième cycle de moulage les troisièmes rangées (numéros 3) et pour un quatrième cycle de moulage les quatrièmes rangées et après le remplissage des rangées, les rangées avec le n°1 sont éjectées et transférées au transport ultérieur, avec ensuite le déroulement logique du cycle.

6. Procédé de refroidissement par lots d'un grand nombre de pièces en forme d'enveloppes moulées par injection (10) et fermées d'un côté par un fond, notamment des préformés, sachant que chaque préformé (10) comporte une partie filetée avec une extrémité ouverte, une partie en forme de tuyau et une extrémité de fond moulée à la manière d'un dôme, qui sont prélevés et refroidis selon le procédé d'injection des moules (8, 9) et de ce fait sont introduits dans des tuyaux de refroidissement à eau d'un réfrigérant complémentaire (19) et de nouveau éjectés et amenées d'un état semi-rigide lors de l'ouverture des demi-moules (8, 9) à un état de stockage indéformable et sont transféré à un transport ultérieur, selon la revendication 1
**caractérisé en ce que**
les tuyaux de refroidissement à eau (22, 100, 200) comporte des parties de fond concaves refroidies à l'eau (207) pour refroidir l'extrémité du fond moulée à la manière d'un dôme des parties moulées par injection (10), sachant que les parties moulées par injection (10) sont introduites mécaniquement dans les tuyaux de refroidissement à eau et sont complètement aspirées dans les tuyaux de refroidissement à eau par la production d'une force d'aspiration sur les pièces moulées par injection, de sorte que pendant le refroidissement complémentaire, les extrémités du fond des parties moulées par injection (10) restent en contact avec la partie concave (207) du fond des tuyaux de refroidissement à eau (22, 100, 200), sachant que les tuyaux de refroidissement à eau (22, 100, 200) du réfrigérant complémentaire (19) sont disposés en rangées parallèles et décalées, sachant que, par glissement transversal et glissement longitudinal correspondants, le réfrigérant complémentaire (19) peut réceptionner deux lots ou davantage de pièces moulées par injection (10) à partir de chaque cycle de moulage par injection, sachant que le remplissage et le refroidissement des lots individuels se produit de manière cyclique dans la première rangée, la deuxième rangée etc.

7. Dispositif de refroidissement par lots d'un grand nombre de pièces en forme d'enveloppes moulées par injection (10) fermées d'un côté par un fond, qui sont prélevées et refroidies après l'opération d'injection des moules (8, 9) et de ce fait sont introduites dans des tuyaux de refroidissement à eau d'un réfrigérant complémentaire (19) et de nouveau éjectées et amenées d'un état semi-rigide à l'ouverture des demi-moules (8, 9) à un état de stockage indéformable et sont transférées à un transport ultérieur, dans lequel les tuyaux de refroidissement à eau du réfrigérant complémentaire sont disposés en rangées parallèles
**caractérisé en ce que**
les rangées sont disposées décalées et le remplissage et le refroidissement des lots individuels peuvent être réalisés par un glissement correspondant transversale et longitudinal du réfrigérant complémentaire (19) pour chaque cycle de moulage par injection dans la première rangée, la deuxième rangée etc.

8. Dispositif selon la revendication 7
**caractérisé en ce que**
pour l'insertion des pièces moulées par injection (10) dans les tuyaux de refroidissement à eau (22, 100, 200) du réfrigérant complémentaire la configuration est transversale et longitudinale, pour le remplissage et le refroidissement cyclique des lots individuels dans la première rangée, la deuxième rangée etc.

9. Dispositif selon la revendication 7 ou 8,
**caractérisé en ce que**
les tuyaux de refroidissement à eau (22, 100, 200) sont disposés dans respectivement plusieurs rangées, et notamment quatre rangées décalées ensemble (1, 2, 3, 4), lesquelles rangées peuvent être commandées par rangée, de sorte que respectivement toutes les rangées 1 ou 2 etc. peuvent être activées simultanément pour l'insertion et l'éjection.

10. Dispositif selon l'une des revendications 7 à 9,
**caractérisé en ce que**
que le réfrigérant complémentaire (19) comporte des espaces aériens (27) ajoutés aux rangées de tuyaux de refroidissement à eau, placées à l'opposé du côté de l'insertion des tuyaux de refroidissement à eau (22, 100, 200), avec une surpression ou une dépression, sachant que les conditions de pression ou de dépression d'air peuvent être commandées par rangée

11. Dispositif selon l'une des revendications 7 à 10,
**caractérisé en ce que**
avec le décalage des rangées parallèles par rapport aux divisions des moules par injection, on utilise une disposition beaucoup plus étroite des tuyaux de refroidissement à eau (22, 100, 200).

12. Dispositif de refroidissement par lots d'un grand nombre de préformés en forme d'enveloppes moulées par injection (10) fermées d'un côté par un fond, dans lequel chaque préformé (10) comporte une partie filetée avec une extrémité ouverte, une partie en forme de tuyau et une extrémité de fond moulée à la manière d'un dôme, prélevés et refroidis selon le procédé d'injection des moules (8, 9) et de ce fait introduits dans des tuyaux de refroidissement à eau d'un réfrigérant complémentaire (19) et de nouveau éjectés et amenés d'un état semi-rigide lors de l'ouverture des demi-moules (8, 9) à un état de stockage indéformable et transférés à un transport ultérieur, selon la revendication 7
**caractérisé en ce que**
les tuyaux de refroidissement à eau (22, 100, 200) présentent des parties de fond concaves refroidies à l'eau pour refroidir l'extrémité de fond des pièces moulées par injection (10) moulée à la manière d'un dôme, sachant que les pièces moulées par injection (10) peuvent être insérées par un moyen mécanique dans les tuyaux de refroidissement à eau (22, 100, 200) et peuvent être aspirées complètement par la production d'une force d'aspiration sur pièces moulées dans les tuyaux de refroidissement à eau (22, 100, 200), pour produire un contact refroidisseur des extrémités de fond des pièces moulées par injection (10) avec la partie de fond concave des tuyaux de refroidissement à eau (22, 100, 200) sachant que les tuyaux de refroidissement à eau (22, 100, 200) sont disposés dans des rangées parallèles et décalées dans le réfrigérant complémentaire (10) et que le remplissage et le refroidissement des lots individuels de chaque cycle de moulage par injection peuvent être réalisés dans la première rangée, la deuxième rangée etc.
